# EUROPEAN PATENT APPLICATION

(11) **EP 4 734 092 A1**
(43) Date of publication of application: **29.04.2026**
(21) Application number: 24208416.8
(22) Date of filing: 23.10.2024
(51) Int. Cl.: G08G 3/02, G01S 13/937

(54) **PREDICTING FUTURE MOVEMENTS OF MARINE VESSELS**

(71) Applicant: ABB SCHWEIZ AG, 5400 Baden (CH)
(72) Inventor: NIEMI, Olli, 00980 Helsinki (FI); RAITIO, Markus, 03850 Lohja (FI)
(74) Representative: Kransell & Wennborg KB

(57) **Abstract**

The present disclosure relates to a method of a predictor in a navigation information system on a first marine vessel (1). The method comprises predicting future movements (5c) of the first marine vessel, receiving information about at least one other marine vessel (2) in the vicinity of the first marine vessel, predicting, based on the received information, future movements (6c) of the at least one other marine vessel, and outputting information about the predicted future movements of the first marine vessel and the predicted future movements of each of the at least one other marine vessel.

## Description

### TECHNICAL FIELD

The present disclosure relates to a predictor in a navigation information system, e.g. an Electronic Chart Display and Information System (ECDIS) or Electronic Chart System (ECS), on a marine vessel, and to a method performed by the predictor.

### BACKGROUND

An ECDIS, typically using an electronic navigational chart (ENC), is used for electronic navigation on marine vessels, e.g. cargo ships. A predictor of the ECDIS can predict future movements of the marine vessel. The ECDIS can aid the captain or other human staff of the marine vessel, or it may form part of an autonomous navigation system of an autonomous vessel.

An Automatic Radar Plotting Aid (ARPA) enables a radar system of a marine vessel to create tracks of a tracked object, e.g. another marine vessel, using radar contacts. The tracked object's course, speed and closest point of approach (CPA) can be calculated.

The Automatic Identification System (AIS) is an automatic tracking system in which respective transceivers on marine vessels broadcasts information about the marine vessel, e.g. unique identification, position, course, and speed of the marine vessel. AIS information supplements information provided by the radar system of the marine vessel. Received AIS information can be displayed on an ECDIS screen.

### SUMMARY

It is an objective of the present invention to enable display of predicted future movements also of other marine vessel(s) on a display screen of a navigation information system, e.g. an ECDIS or ECS, not only predicted future movements of the navigation information system's own marine vessel.

According to an aspect of the present invention, there is provided a method of a predictor in a navigation information system on a first marine vessel. The method comprises predicting future movements of the first marine vessel, receiving information about at least one other marine vessel in the vicinity of the first marine vessel, predicting, based on the received information, future movements of the at least one other marine vessel, and outputting information about the predicted future movements of the first marine vessel and the predicted future movements of each of the at least one other marine vessel.

According to another aspect of the present invention, there is provided a predictor for a navigation information system on a first marine vessel. The predictor comprises processing circuitry, and data storage storing instructions executable by said processing circuitry whereby said predictor is operative to perform an embodiment of the method of the present disclosure.

According to another aspect of the present invention, there is provided a navigation information system comprising an embodiment of the predictor of the present disclosure. The navigation information system may be an ECDIS or ECS, preferably an ECDIS.

According to another aspect of the present invention, there is provided a marine vessel comprising an embodiment of the navigation information system of the present disclosure.

According to another aspect of the present invention, there is provided a computer program product comprising computer-executable components for causing a predictor to perform an embodiment of the method of the present invention when the computer-executable components are run on processing circuitry comprised in the predictor.

By the predictor receiving information about the at least one other marine vessel, e.g. AIS information and/or ARPA information, the predictor is able to predict future movements of each of said at least one other marine vessel. Information about the predicted future movements of each of said at least one other marine vessel may then be used to initiate display of the future movements of each of said at least one other marine vessel on the display screen of the navigation information system. Alternatively, information about the predicted future movements of each of said at least one other marine vessel may be sent to, and used in, an autonomous navigation system on the first marine vessel if the first marine vessel is an autonomous vessel, e.g. as input to path planning.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 schematically illustrates a display screen of an ECDIS or other navigation information system on the first marine vessel, in accordance with some embodiments of the present invention.
Fig 2 is a schematic block diagram of the first marine vessel in accordance with some embodiments of the present invention.
Fig 3 is a schematic block diagram of an other marine vessel in accordance with some embodiments of the present invention.
Fig 4 is a schematic flow chart of an embodiment of the method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

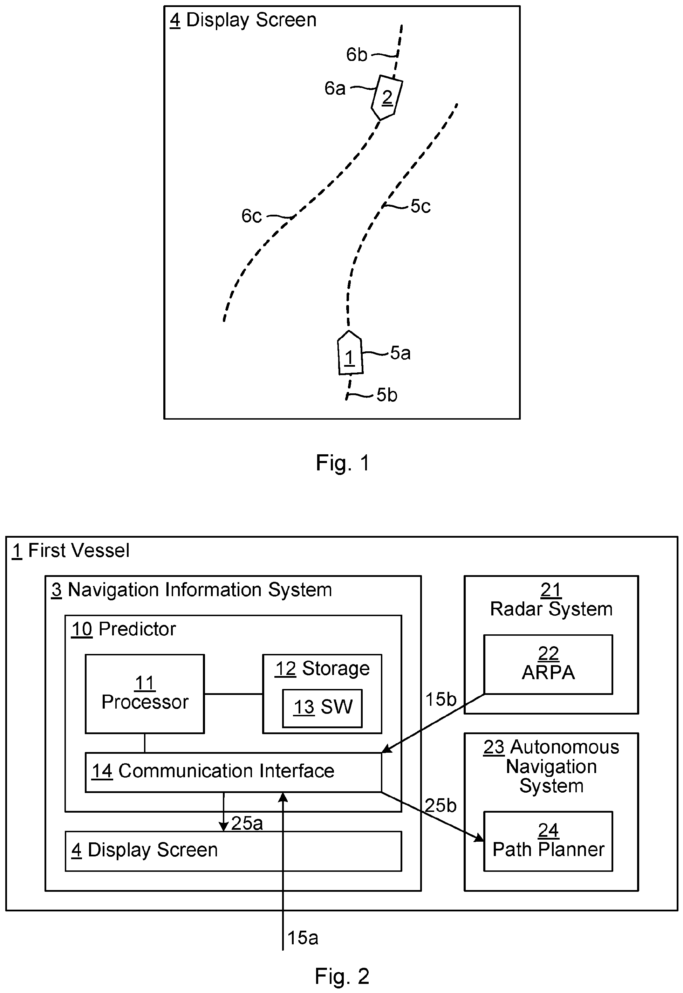

Figure 1 illustrates a display screen 4 of a navigation information system on a marine vessel, e.g. the first marine vessel 1 discussed herein. As in a conventional ECDIS, the predictor of the navigation information system predicts the future movements 5c of the first marine vessel 1, e.g. for a predetermined future time period, and presents these future movements 5c on the display screen 4. In the example of figure 1, the current position 5a of the first marine vessel is illustrated by a ship icon, while past movements 5b and predicted future movements 5c are illustrated by a dashed line, but any other way of visualisation on the display screen 4 may alternatively be used.

In accordance with the present invention, the predictor also predicts future movements 6c of each of at least one other marine vessel 2, located in the vicinity of the first marine vessel e.g. as defined as being within AIS range or radar range, typically for the same predetermined future time period. Thus, also these future movements 6c of the at least one other marine vessel 2 may be presented on the display screen 4, e.g. in addition to the current position 6a and past movements 6b of the at least one other marine vessel 2.

Alternatively, in some embodiments, a display screen 4 (or any other user interface of the navigation information system 3) may not be needed, e.g. if the first marine vessel is an autonomous vessel (e.g. unmanned) controlled by an autonomous navigation system rather than by (or in addition to) a human navigator. Information about the predicted future movements of the first marine vessel and the predicted future movements of each of the at least one other marine vessel 2 may then be sent to the autonomous navigation system instead of, or in addition to, to a display screen 4.

Figure 2 illustrates the first marine vessel 1. The first marine vessel 1 comprises a navigation information system 3, e.g. an ECDIS or ECS 3, preferably an ECDIS 3, which navigation information system comprises a predictor 10 configured for predicting future movements 5c and 6c of both the first marine vessel 1 and each of the other marine vessel(s) 2.

The predictor 10 comprises processing circuitry 11 e.g. a central processing unit (CPU). The processing circuitry 11 may comprise one or a plurality of processing units in the form of microprocessor(s). However, other suitable devices with computing capabilities could be comprised in the processing circuitry 11, e.g. an application specific integrated circuit (ASIC), a field programmable gate array (FPGA) or a complex programmable logic device (CPLD). The processing circuitry 11 is configured to run one or several computer program(s) or software (SW) 13 stored in a storage 12 of one or several storage unit(s) e.g. a memory. The storage unit is regarded as a computer readable means 12, forming a computer program product together with the SW 13 stored thereon as computer-executable components and may e.g. be in the form of a Random Access Memory (RAM), a Flash memory or other solid state memory, or a hard disk, or be a combination thereof. The processing circuitry 11 may also be configured to store data in the storage 12, as needed. The predictor 10 also comprises a communication interface 14, e.g. comprising a transceiver, for communication of the predictor 10 with other entities external to the predictor. For instance, the predictor 10 may via its communication interface 14 receive information 15 about the at least one other marine vessel 2 in the vicinity of the first marine vessel 1. Additionally or alternatively, the predictor 10 may via its communication interface 14 output information 25 about the predicted future movements 5c of the first marine vessel 1 and/or the predicted future movements 6c of each of the at least one other marine vessel 2.

In some embodiments, the navigation information system 3 also comprises a display screen 4, e.g. as discussed with reference to figure 1 (above). The display screen 4 may receive information 25a from the predictor 10, e.g. via its communication interface 14, about the predicted future movements 5c of the first marine vessel 1 and the predicted future movements 6c of each of the at least one other marine vessel 2, and present said future movements 5c and 6c graphically, e.g. as in figure 1. Thus, in some embodiments of the present invention, the outputting of information 25 from the predictor 10 comprises outputting the information 25a to a display screen 4 of the navigation information system 3 for initiating display of the predicted future movements 5c of the first marine vessel 1 and the predicted future movements 6c of each of the at least one other marine vessel 2 on the display screen 4.

In some embodiments of the present invention, the first marine vessel 1 is an autonomous vessel and thus comprises an autonomous navigation system 23, e.g. comprising a path planner 24 for path planning. Path planning is typically an aspect of autonomous navigation, and is used to find a collision-free path that is dynamically feasible. There may be two types of path planning, global and local path planning. Global path planning may be used to find a dynamically feasible path from a starting point to an end point by considering static obstacles, while local path planning may include dynamic adjustments made by the first marine vessel 1 when navigating along the globally planned path by considering both static and dynamic obstacles such as the other vessels 2. In some embodiments, the outputting of information 25 from the predictor 10 comprises outputting the information 25b to the autonomous navigation system 23 on the first marine vessel 1, e.g. to a path planner 24 thereof, especially for local path planning.

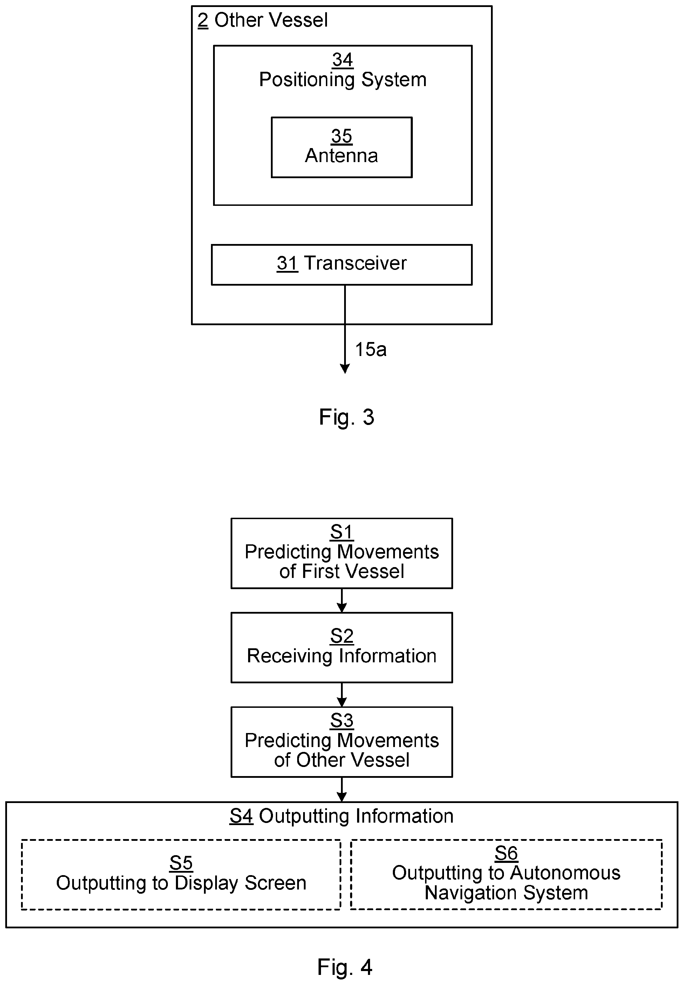

In some embodiments of the present invention, at least a part of the information 15 about the at least one other marine vessel 2, received by the predictor 10, is information 15a received from a respective transceiver on each of the at least one other marine vessel 2. In some embodiments, said at least part of the received information 15a is broadcast from the respective transceiver on the other marine vessel(s) 2. Additionally or alternatively, in some embodiments, said at least part of the received information 15a is or comprises AIS information. Updated AIS information 15a may be received every 2-10 seconds from each of the other marine vessels 2, whereby the information 25 may similarly be output by the predictor every 2-10 seconds, in sync with the receiving of the AIS information 15a. In some embodiments, the AIS information includes, for each of the at least one other marine vessel 2, information specifying any or all of: dimensions of the vessel; position; speed over ground; true heading; true bearing; course over ground; Rate of Turn, ROT; and/or location of the positioning system's 34 antenna 35 (see figure 3) on board the vessel 2.

In some embodiments of the present invention, the first marine vessel 1 further comprises a radar system 21, e.g. comprising an ARPA 22. Then, in some embodiments, at least a part of the information 15 about the at least one other marine vessel 2, received by the predictor 10, may be information 15b received from the radar system 21, e.g. from an ARPA 22 thereof. In some embodiments, the information 15b received from the radar system 21 includes, for each of the at least one other marine vessel 2, information specifying any or all of: dimensions of the vessel; position; speed over ground; heading; bearing; course over ground; and/or ROT.

Figure 3 illustrates any one of the other marine vessel(s) 2 discussed herein. The discussion about the first marine vessel 1 with reference to figure 2 may also be relevant to the other marine vessel 2.

In some embodiments, the other marine vessel 2 comprises a transceiver 31 for sending the information 15a, especially if, as discussed above, at least a part of the information 15 about the at least one other marine vessel 2, received by the predictor 10, is information 15a received from the respective transceiver 31 on each of the at least one other marine vessel 2. In some embodiments, the information 15a is broadcast from the transceiver 31. Additionally or alternatively, in some embodiments, the information 15a is or comprises AIS information.

Additionally or alternatively, in some embodiments, the other marine vessel 2 comprises a positioning system 34 based on satellite navigation, e.g. for a Global Navigation Satellite System (GNSS) such as Global Positioning System (GPS). Information obtained from the positioning system 34 may then be sent as part of the information 15a sent by the transceiver 31 to the predictor 10 of the first marine vessel 1, e.g. as AIS information. Such information from the positioning system 34 typically specifies the position of the antenna 35 of the positioning system. Since marine vessels 2 may be rather large, the information 15a sent by the transceiver 31 to the predictor 10 of the first marine vessel 1 may, in addition to position information from the positioning system 34, include information about the location of the antenna 35 within the other vessel 2.

Figure 4 is illustrates some embodiments of the method of the present invention. The method is performed by a predictor 10 comprised in a navigation information system 3 as discussed herein. The method comprises predicting S1 future movements 5c of the first marine vessel 1. The method also comprises, before, during and/or after the predicting S1 of future movements 5c of the first marine vessel 1, receiving S2 information 15 about at least one other marine vessel 2 in the vicinity of the first marine vessel 1. Following the receiving S2 of the information 15, the method also comprises, based on the received S2 information 15, predicting S3 future movements 6c of the at least one other marine vessel 2. Then, the method also comprises outputting S4 information 25 both about the predicted S1 future movements 5c of the first marine vessel 1 and about the predicted S3 future movements 6c of each of the at least one other marine vessel 2.

In some embodiments of the present invention, the outputting S4 of the information 25 comprises outputting S5 at least some of the information 25a to a display screen 4 of the navigation information system 3 for initiating display of both the predicted S1 future movements 5c of the first marine vessel 1 and the predicted S3 future movements 6c of each of the at least one other marine vessel 2 on the display screen 4. Then, in some embodiments, the display screen 4 displays both the predicted S1 future movements 5c of the first marine vessel 1 and the predicted S3 future movements 6c of each of the at least one other marine vessel 2 on the display screen 4 in response to the outputting S5 of the information 25a, e.g. to a human user of the navigation information system 3.

Additionally or alternatively, in some embodiments of the present invention, the outputting S4 of the information 25 comprises outputting S6 at least some of the information 25b to an autonomous navigation system 23, e.g. to a path planner 24 thereof, on the first marine vessel 1.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of a predictor (10) in a navigation information system (3) on a first marine vessel (1), the method comprising:
predicting (S1) future movements (5c) of the first marine vessel (1);
receiving (S2) information (15) about at least one other marine vessel (2) in the vicinity of the first marine vessel (1);
based on the received (S2) information (15), predicting (S3) future movements (6c) of the at least one other marine vessel (2); and
outputting (S4) information (25) about the predicted (S1) future movements (5c) of the first marine vessel (1) and the predicted (S3) future movements (6c) of each of the at least one other marine vessel (2).

2. The method of claim 1, wherein the outputting (S4) comprises outputting (S5) the information (25a) to a display screen (4) of the navigation information system (3) for initiating display of the predicted (S1) future movements (5c) of the first marine vessel (1) and the predicted (S3) future movements (6c) of each of the at least one other marine vessel (2) on the display screen (4).

3. The method of claim 1 or 2, wherein the outputting (S4) comprises outputting (S6) the information (25b) to an autonomous navigation system (23), e.g. to a path planner (24) thereof, on the first marine vessel (1).

4. The method of any preceding claim, wherein at least a part of the received (S2) information (15a) is received from a respective transceiver (31) on each of the at least one other marine vessel (2).

5. The method of claim 4, wherein said at least part of the received (S2) information (15a) is broadcast from the respective transceiver (31).

6. The method of claim 4 or 5, wherein said at least part of the received (S2) information (15a) is or comprises Automatic Identification System, AIS, information.

7. The method of any preceding claim, wherein at least a part of the received (S2) information (15b) is received from a radar system (21) on the first marine vessel, e.g. from an Automatic Radar Plotting Aid, ARPA, (22) comprised in the radar system (21).

8. The method of any preceding claim, wherein the received (S2) information (15) includes, for each of the at least one other marine vessel (2), information specifying any or all of: dimensions of the vessel; position; speed over ground; true heading; true bearing; course over ground; Rate of Turn, ROT; and location of the positioning system's (34) antenna (35) on board the vessel (2).

9. A predictor (10) for a navigation information system (3) on a first marine vessel (1), the predictor comprising:
processing circuitry (11); and
storage (12) storing instructions (13) executable by said processing circuitry (11) whereby said predictor (10) is operative to perform the method of any preceding claim.

10. A navigation information system (3) comprising the predictor (10) of claim 9, e.g. wherein the navigation information system (3) is an ECDIS or ECS, preferably an ECDIS.

11. A first marine vessel (1) comprising the navigation information system (3) of claim 10.

12. The first marine vessel of claim 11, comprising an autonomous navigation system (23).

13. A computer program product (12) comprising computer-executable components (13) for causing a predictor (10) to perform the method of any one of claims 1-8 when the computer-executable components are run on processing circuitry (11) comprised in the predictor.
